# EUROPÄISCHE PATENTSCHRIFT

(11) **EP 1 173 722 B1**
(45) Veröffentlichungstag und Bekanntmachung des Hinweises auf die Patenterteilung: **02.07.2003**
(21) Anmeldenummer: 00940127.4
(22) Anmeldetag: 17.04.2000
(51) Int. Cl.: G01B 7/02, G01D 5/14

(54) **WEGMESSVORRICHTUNG**
DISTANCE MEASURING DEVICE
DISPOSITIF DE MESURE DE DEPLACEMENT

(30) Priorität: 17.04.1999 DE 19917466
(43) Veröffentlichungstag der Anmeldung: 23.01.2002
(73) Patentinhaber: ROBERT BOSCH GMBH, 70442 Stuttgart (DE)
(72) Erfinder: REICHL, Asta, D-70499 Stuttgart (DE); KLOTZBUECHER, Thomas, D-70635 Rudersberg (DE); MOERBE, Matthias, D-74360 Ilsfeld-Helfenberg (DE); SCHWARZ, Walter, D-71706 Markgroeningen (DE)
(86) Internationale Anmeldenummer: DE0001207
(87) Internationale Veröffentlichungsnummer: WO00063640

(56) Entgegenhaltungen:
- EP-A- 0 907 068
- DE-A- 2 653 943
- PATENT ABSTRACTS OF JAPAN vol. 010, no. 327 (P-513), 7. November 1986 (1986-11-07) & JP 61 134601 A (KOKUSAN DENKI CO LTD), 21. Juni 1986 (1986-06-21)

## Beschreibung

### Stand der Technik

Die Erfindung geht aus von einer Meßvorrichtung nach der Gattung des Anspruchs 1. Aus der DE 29 23 644 C2 ist ein Sensor zur Wegmessung bekannt, der einen zylinderförmig ausgebildeten, aus ferromagnetischem Material hergestellten Rahmen aufweist. Im Rahmen wird gleitend ein Permanentmagnet bewegt, dessen Bewegung mit Hilfe eines Stößels übertragen wird und proportional zur Bewegung eines Bauteils ist. Ferner ist in einem Spalt des Rahmens und somit im vom Magneten erzeugten geschlossen Magnetkreis ein magnetfeldempfindliches Element angeordnet, dessen Ausgangssignal proportional zur Bewegung des Magneten ist. Der Sensor baut aber relativ aufwendig und teuer. Ferner können bei der Bewegung des Magneten hohe Reibungsverluste entstehen, die das Ausgangssignal verfälschen können.

JP-A-61 134 601 beschreibt eine Wegmessein-richtung mit einem beweglich angeordneten, senkrecht zur Bewegungsrichtung polarisierten Magneten, der ein Flussleitteil trägt, das eine zur Bewegungsrichtung schiefe Oberfläche aufweist. Ein feststehend angeordnetes, magnetfeldempfindliches Element steht mit dieser schiefen Oberfläche in Wirkverbindung.

### Vorteile der Erfindung

Die erfindungsgemäße Meßvorrichtung mit den kennzeichnenden Merkmalen des Anspruchs 1 hat demgegenüber den Vorteil, daß bei geringem Montageaufwand ein lineares Ausgangssignal für Wegmessungen ermittelt werden kann. Die zu bestimmende Wegstrecke ist relativ lang und kann zum Beispiel 10 mm betragen. Ferner kann der Sensor aufgrund der einfachen Konstruktion ohne allzugroßen Änderungs- und Montageaufwand in Systeme, wie zum Beispiel Abgasrückführungsventil, Ventilhuberfassung, Karosserieeinfederung oder Getriebesteuerung, eingebaut werden.

Durch die in den abhängigen Ansprüchen aufgeführten Maßnahmen sind vorteilhafte Weiterbildungen und Verbesserungen der im Anspruch 1 angegebenen Meßvorrichtung möglich.

### Zeichnung

Ausführungsbeispiele der Erfindung sind in der Zeichnung dargestellt und in der nachfolgenden Beschreibung näher erläutert.
Die Figur 1 zeigt einen Längsschnitt durch einen Sensor,
Figur 1a eine Draufsicht und
Figur 1b eine Ansicht der Stirnseite,

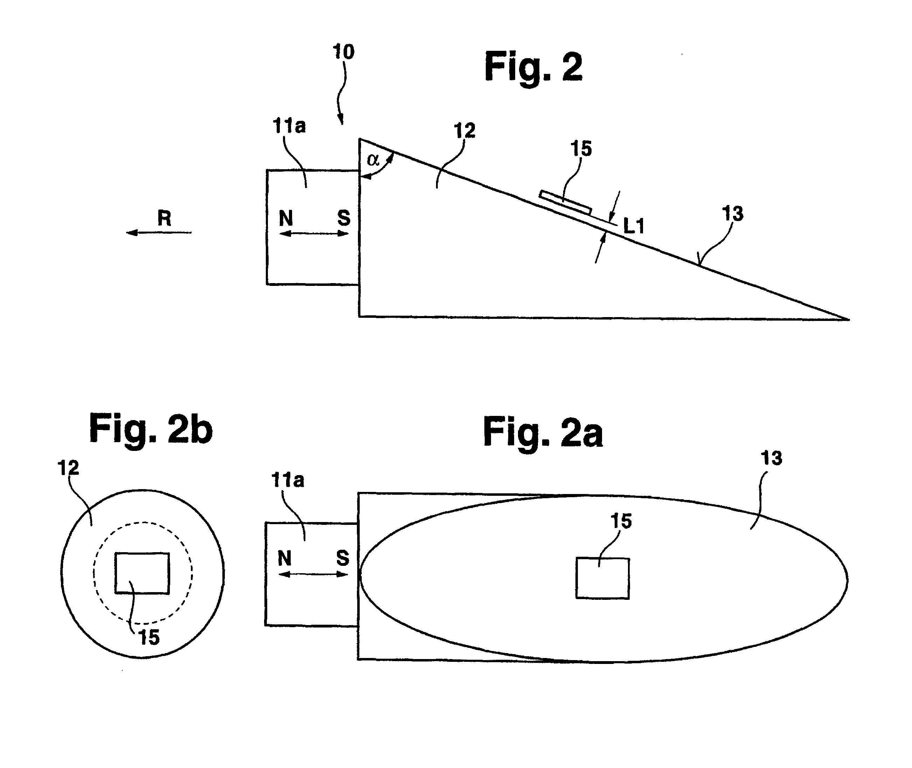

die Figuren 2 bis 4b zeigen jeweils Abwandlungen in den in den Figuren 1 bis 1b verwendeten Darstellungsweisen.
Die Figur 5 zeigt einen Schnitt durch eine Einspritzdüse für die Kraftstoffzufuhr bei einem Kraftfahrzeug mit Verbrennungsmotor, wobei der Hub der Düsennadel erfaßt werden soll.

### Beschreibung der Ausführungsbeispiele

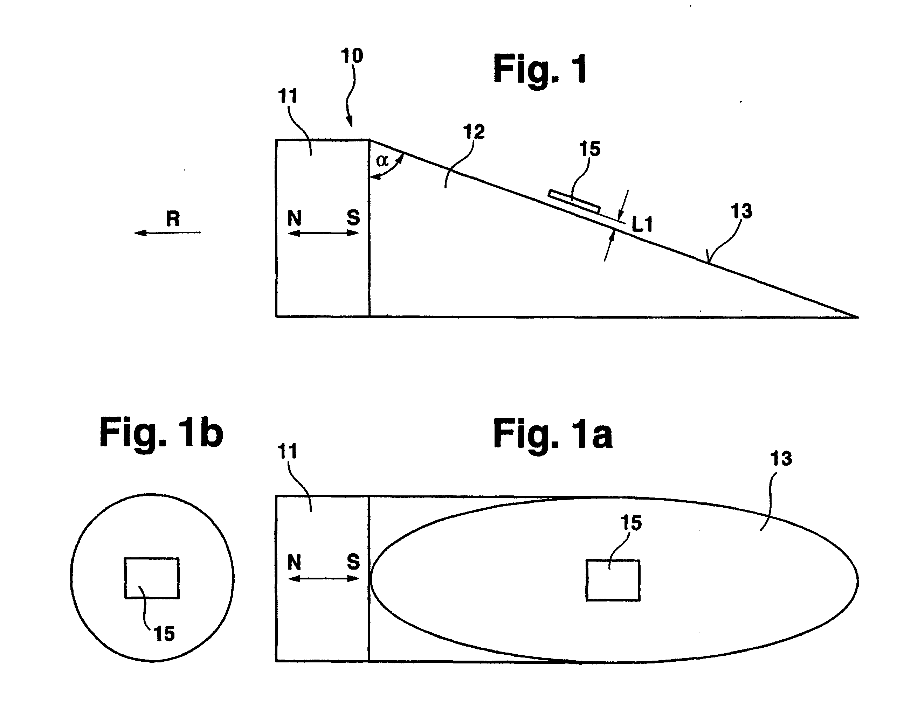

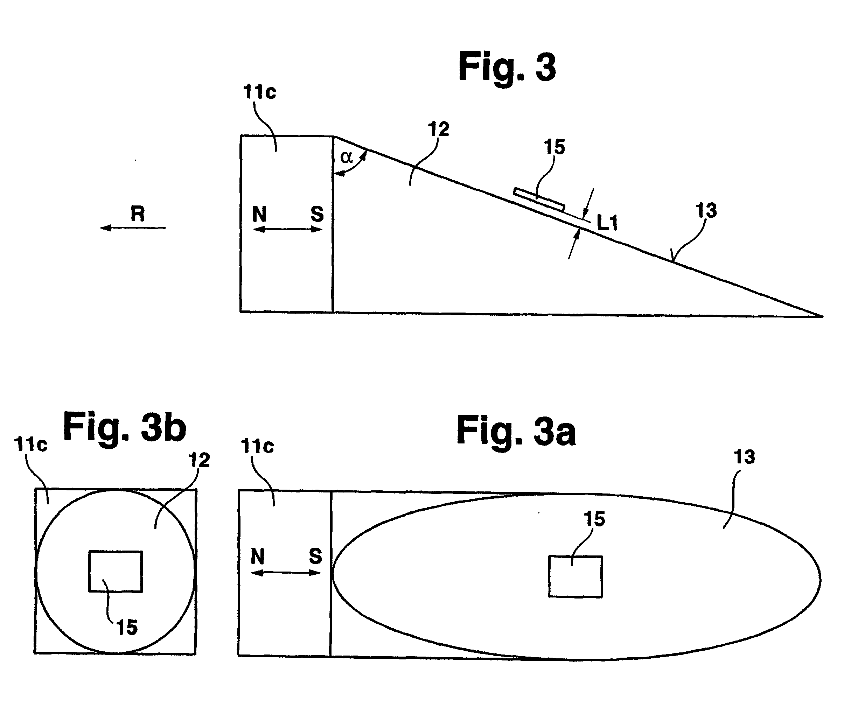

In Figur 1 ist mit 10 ein Sensor bezeichnet, der zur Messung des Wegs eines nicht dargestellten Bauteils dient. Der Sensor 10 besteht aus einem Magneten 11, insbesondere einem Permanentmagneten, der in Bewegungsrichtung R polarisiert ist, und einem Flußleitteil 12 aus magnetisch leitendem Material, zum Beispiel Weicheisen. Das Flußleitteil 12 weist eine unter einem Winkel α zur Bewegungsrichtung R geneigte Oberfläche 13 auf. Ferner ist das Flußleitstück 12 in der Form eines Zylinders hergestellt, d.h. es weist am Übergang des Magneten 11 zum Flußleitstück 12 einen kreisförmigen Querschnitt auf. Aufgrund der nahezu zylinderförmigen Ausgestaltung des Flußstücks 12 ist die Oberfläche 13 oval ausgebildet, wie insbesondere in der Figur 1a erkenntlich ist. Mit einem Luftspalt L1 ist ein magnetfeldempfindliches Element 15 der schiefen Oberfläche 13 gegenüberliegend zugeordnet. Als magnetfeldempfindliche Elemente 15 können zum Beispiel Feldplatten, Magnettransistor, Spulen, magnetoresistive Elemente oder ein Hall-Element verwendet werden. Wichtig hierbei ist, daß das magnetfeldempfindliche Element eine möglichst lineare Abhängigkeit seines Ausgangssignals von der magnetischen Induktion B aufweist. Der Magnet 11 kann wie in der Figur 1b erkennbar ebenfalls zylinderförmig ausgebildet sein und den Flächendurchmesser wie das Flußleitstück 12 aufweisen. Abhängig von der Stärke des Magneten bzw. dem notwendigen Magnetfeld, das zur Messung verwendet wird, kann der Magnet 11a auch einen geringeren Durchmesser als das Flußleitteil 12 haben. Auch ist es, wie in der Figur 3b erkennbar, nicht notwendig, daß der Magnet 11 die Form des Flußleitteils 12 hat. Er kann zum Beispiel auch einen quadratischen, wie in der Figur 3b gezeigt, oder einen rechteckigen Querschnitt aufweisen. Beim Flußleitstück 12 ist es aber notwendig, daß die Oberfläche 13 eine ovale Form hat, um ein möglichst linear verlaufendes Ausgangssignal zu erhalten.

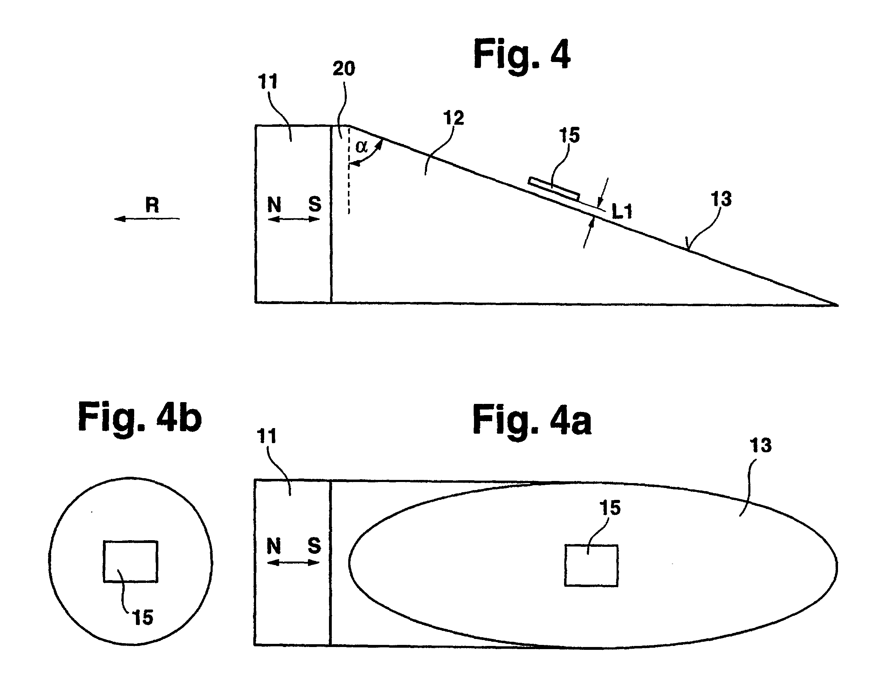

Wie in der Figur 4 dargestellt ist, ist es nicht unbedingt notwendig, daß die schief verlaufende Oberfläche 13 direkt am Übergang vom Magneten 11 zum Flußleitteil 12 beginnt. Es kann sich hier, wie in der Figur 4 ersichtlich, auch noch ein Bund 20 befinden, ehe die schief verlaufende Oberfläche 13 beginnt. Während der Bewegung des Magneten 11 und des Flußleitteils 12, die parallel zum zu messenden Bauteil in der Bewegungsrichtung R erfolgt, wird der Luftspalt L1 je nach Bewegungsrichtung vergrößert oder verkleinert. Das magnetfeldempfindliche Element 15 ist ortsfest angebracht, so daß sich aufgrund der schief verlaufenden Oberfläche 13 bei der Bewegung des Magneten 11 und des Flußleitteils 12 der Luftspalt verändert. Aufgrund der sich proportional zur Bewegungsrichtung R verändernden Größe des Luftspalts L1 verändert sich auch das durch das magnetfeldempfindliche Element 15 strömende Magnetfeld, so daß die im Element 15 erzeugte magnetische Induktion B verändert wird.

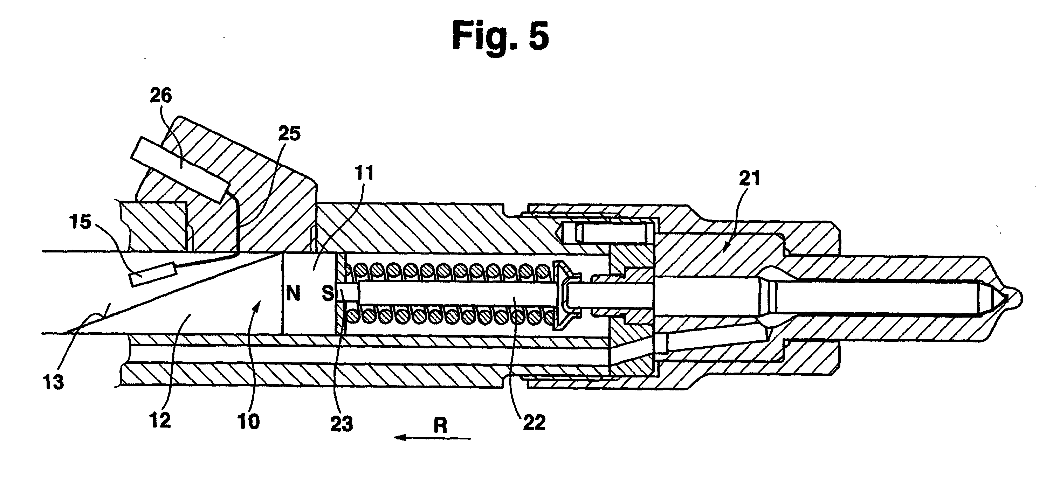

Die Figur 5 zeigt einen Schnitt durch eine Einspritzdüse 21 für die dosierte Kraftstoffzufuhr für einen Verbrennungsmotor, beispielsweise einen Dieselmotor. Eine in ihrer Funktion hier nicht näher erläuterte Düsennadel 22 als mechanisches Teil führt in ihrer Längsachse zum Teil relativ kurze Hubbewegungen zum Öffnen oder Verschließen eines Ventilsitzes in der Einspritzdüse 21 aus. Das Ende 23 der Düsennadel 22 ragt durch die Anschlagschulter der Feder der Düsennadel 22 hindurch, und ist dort mit dem Magneten 11 des Sensors 10 verbunden. Die Längsachse der Düsennadel 22 ist in der Bewegungsrichtung R ausgerichtet. Die schiefe Oberfläche 13 des Flußleitstücks 12 ist dem ortsfest angeordneten magnetfeldempfindlichen Element 15 zugeordnet. Das Element 15 ist mit Leitungen 25 mit einer elektrischen Einheit 26, die im Gehäuse der Einspritzdüse 21 angeordnet ist, verbunden.

## Patentansprüche

1. Wegmeßvorrichtung (10), bestehend aus einem aus magnetisch leitendem Material bestehenden Flußleitteil (12), einem an einem Ende des Flußleitteils angeordneten Magneten (11) und einem magnetfeldempfindlichen Element (15), wobei das Flußleitteil (12) eine gegenüber der Bewegungsrichtung schiefe Oberfläche (13) aufweist, die mit dem magnetfeldempfindlichen Element (15) in Wirkverbindung steht, wobei eine relative Bewegung zwischen dem magnetfeldempfindlichen Element (15) und der schiefen Oberfläche (13) erfolgt, **dadurch gekennzeichnet, dass** der Magnet (11) in Bewegungsrichtung (R) polarisiert ist und die schiefe Oberfläche (13) des Flußleitteils (12) in etwa oval ausgebildet ist.

2. Messvorrichtung nach Anspruch 1, **dadurch gekennzeichnet, dass** das magnetfeldempfindliche Element (15) nahezu parallel zur schiefen Oberfläche (13) angeordnet ist.

3. Wegmessvorrichtung nach Anspruch 1 oder 2, **dadurch gekennzeichnet, dass** das magnetfeldempfindliche Element (15) ein Hall-Element ist.

4. Wegmessvorrichtung nach einem der Ansprüche 1 bis 3, **dadurch gekennzeichnet, dass** das Flussleitteil (12) mindestens im Übergang zum Magneten (11) einen runden Querschnitt hat.

## Claims

1. Distance measuring device (10), composed of a flux-permeable part (12) which is composed of a magnetically permeable material, a magnet (11) which is arranged at one end of the flux-permeable part and a magnetic-field-sensitive element (15), the flux-permeable part (12) having a surface (13) which is oblique with respect to the direction of movement and which is operatively connected to the magnetic-field-sensitive element (15), a relative movement taking place between the magnetic-field-sensitive element (15) and the oblique surface (13), **characterized in that** the magnet (11) is polarized in the direction (R) of movement and the oblique surface (13) of the flux-permeable part (12) is made approximately oval.

2. Measuring device according to Claim 1, **characterized in that** the magnetic-field-sensitive element (15) is arranged virtually parallel with the oblique surface (13).

3. Distance measuring device according to Claim 1 or 2, **characterized in that** the magnetic-field-sensitive element (15) is a Hall element.

4. Distance measuring device according to one of Claims 1 to 3, **characterized in that** the flux-permeable part (12) has a round cross section at least at the junction with the magnet (11).

## Revendications

1. Dispositif de mesure de déplacement (10) composé d'une partie magnétoconductrice (12) en un matériau magnétiquement conducteur, d'un aimant (11) placé à une extrémité de la partie magnétoconductrice et d'un élément (15) sensible au champ magnétique, la partie magnétoconductrice (12) présentant, par rapport au sens du mouvement, une surface oblique (13) agissant sur l'élément (15) sensible au champ magnétique en effectuant un mouvement relatif entre l'élément (15) sensible au champ magnétique et la surface oblique (13),
**caractérisé en ce que**
l'aimant (11) est polarisé dans le sens du mouvement (R) et la surface oblique (13) de la partie magnétoconductrice (12) est formée de manière approximativement ovale.

2. Dispositif de mesure selon la revendication 1,
**caractérisé en ce que**
l'élément (15) sensible au champ magnétique est disposé de manière presque parallèle à la surface oblique (13).

3. Dispositif de mesure de déplacement selon la revendication 1 ou 2,
**caractérisé en ce que**
l'élément (15) sensible au champ magnétique est un élément à effet Hall.

4. Dispositif de mesure de déplacement selon l'une des revendications 1 à 3,
**caractérisé en ce que**
la partie magnétoconductrice (12) a une section transversale ronde au moins au passage vers l'aimant (11).
